# EUROPÄISCHE PATENTSCHRIFT

(11) **EP 3 759 326 B1**
(45) Veröffentlichungstag und Bekanntmachung des Hinweises auf die Patenterteilung: **29.12.2021**
(21) Anmeldenummer: 19709408.9
(22) Anmeldetag: 28.02.2019
(51) Int. Cl.: F01N 11/00, F02D 41/00, G01D 3/00

(54) **DIAGNOSEVERFAHREN ZUR SPRUNGERKENNUNG EINER KONTINUIERLICHEN MESSGRÖSSE, STEUERUNG ZUR DURCHFÜHRUNG DES VERFAHRENS**
DIAGNOSTIC METHOD FOR DETECTING DISCONTINUITIES IN A CONTINUOUS MEASUREMENT VARIABLE AND CONTROLLER FOR CARRYING OUT THE METHOD
PROCÉDÉ DE DIAGNOSTIC PERMETTANT DE DÉTECTER UN SAUT D'UNE QUANTITÉ DE MESURE CONTINUE, COMMANDE POUR LA MISE EN OEUVRE DE CE PROCÉDÉ

(30) Priorität: 01.03.2018 DE 102018203036
(43) Veröffentlichungstag der Anmeldung: 06.01.2021
(73) Patentinhaber: VOLKSWAGEN AKTIENGESELLSCHAFT, 38440 Wolfsburg (DE)
(72) Erfinder: PANKRATZ, Kirsten, 38100 Braunschweig (DE); FRÖHLICH, Björn, 38518 Gifhorn (DE); SCHRÖDER, Ulrich, 38104 Braunschweig (DE)
(86) Internationale Anmeldenummer: PCT/EP2019/054981
(87) Internationale Veröffentlichungsnummer: WO 2019/166547

(56) Entgegenhaltungen:
- EP-A2- 1 148 228
- EP-A2- 1 630 383
- EP-A2- 2 078 945
- WO-A1-2007/121595
- DE-A1- 4 422 149
- DE-A1-102011 115 630

## Beschreibung

Die Erfindung betrifft ein Diagnoseverfahren zur Sprungerkennung einer kontinuierlichen Messgröße sowie eine Steuerung zur Durchführung des Verfahrens.

Bei der Erfassung von Sensordaten - insbesondere bei Verbrennungsmotoren im Kraftfahrzeugbereich -, die einen bestimmten Betriebszustand eines Stellelements angeben sollen, kann es durch bauteilbedingte Schwankungen (Toleranzen) zu Abweichungen zwischen den erfassten Messwerten und dem tatsächlich zu bestimmenden Betriebszustand kommen. Insbesondere dann, wenn der Betriebszustand aufwändig aus mehreren Betriebs- und Messgrößen modelliert wird, können solche Bauteiltoleranzen Probleme bereiten, da eine globale Modellierung unter Umständen zu ungenau ist und Fehlerzustände nicht erkannt werden können oder die Modellierung bzw. die Bedeutung bauteilspezifisch erfolgen muss und so eine spezielle Modellierung oder Modellanpassung für jedes Bauteil oder eine Bauteilgruppe vorgenommen werden muss.

So besteht beispielsweise bei Saugrohrdruckmodellen ein Ansatz darin, dass eine Adaptionsfläche (freigegebene Drosselklappenfläche) bestimmt wird, indem auf der Grundlage der allgemeinen Gasgleichung und der Massenbilanz über das Saugrohr sowie durch Aufsummierung der ein- und ausfließenden Gasmassenströme die Änderung des Saugrohrdrucks berechnet wird. Damit kann dann die Zylinderfüllung direkt ermittelt werden.

Der Luftmassenstrom wird dabei im Wesentlichen von der Drosselklappe kontrolliert und wird mittels einer kompressiblen Drosselströmung modelliert. Als Eingangsgrößen dienen dabei die freigegebene Drosselklappenfläche, die Lufttemperatur, der Isentropenexponent, die allgemeine Gaskonstante sowie der Druck vor und das Druckverhältnis über die Drosselklappe.

Mit der genauen Modellierung dieser Luftmassenströmung steht und fällt die genau zu bestimmende Kraftstoffmenge, die in den Zylinder eingespritzt werden soll. Bauteilbedingte Schwankungen der Drosselklappe, die zu veränderlichen Größen führen, können zwar von solchen Modellen erlernt oder individuell bedatet werden. Es ist jedoch wichtig, solche Schwankungen von tatsächlichen Fehlern zu unterscheiden, die beispielsweise durch Leckagen im System entstehen, welche die Luftmassenströme erheblich beeinflussen können.

So bilden bei modernen Motorkonzepten die Systeme zur Tankentlüftung oder auch zur Kurbelgehäuseentlüftung Teile der Frischluftzufuhr. Unerkannte Leckagen, fehlerhafte Bauteile oder unzulässige Betriebszustände in diesen Systemen können die Saugrohrfüllungsmodelle erheblich stören, so dass Gemischfehler auftreten können.

So wird beispielsweise die Modellierung der Adaptionsfläche der Drosselklappe auch herangezogen, um eine Leckage im erweiterten Saugrohrsystem zu identifizieren. Dabei wird bei der Überschreitung eines Schwellwerts angenommen, dass eine Leckage im System vorliegt. Dieser Ansatz kann ebenfalls dazu dienen, eine "Leckage" zu identifizieren, die durch einen nicht gesteckten Ölpeilstab verursacht wird, der im Saugrohrsystem detektierbar ist. Es besteht jedoch das Problem, dass bei großen Bauteilstreuungen (hinsichtlich der geöffneten Querschnittsflächen einer Drosselklappe) eine Diagnoseschwelle ggf. nicht so ausgelegt werden kann, um die Querschnittsöffnung eines gezogenen Ölpeilstabs zu erkennen. Je nach Bauteilstreuung könnte es bei einem I.O.-System (In-Ordnung-System, also auch bei gestecktem Ölpeilstab) bei ungünstiger Toleranzlage zu einer (falschen) Fehlererkennung kommen, oder bei gestecktem Ölpeilstab ein nicht vorhandener Fehler angezeigt werden.

Der Ansatz, eine Kompromissbedatung der Diagnosefunktion so vorzunehmen, dass bei einem I.O.-System keine Fehlererkennung (zu geringe Sensitivität für ein Signalsprungverhalten) erfolgen kann, ist unbefriedigend, da dann eine Erkennung eines gezogenen Ölpeilstabs oder einer anderen Leckage bzw. Fehlfunktion im System unter Umständen nicht gewährleistet werden kann. Dieses Problem besteht nicht nur für eine Leckage im Kurbelgehäuse, sondern in ähnlicher Weise für ein Tankentlüftungssystem, die ebenfalls mit dem Saugrohrsystem gekoppelt sind und daher in den Saugrohrfüllungsmodellen bzw. bei der Modellierung der Drosselklappenadaptionsflächen zu berücksichtigen sind.

Es sind unterschiedliche Ansätze bekannt, um die Messdaten eines Messsystems zu analysieren und deren Qualität zu bewerten.

Beispielsweise stellt die EP 2 078 945 A2 ein Verfahren bereit, bei dem die Messdaten zu frei wählbaren Zeitpunkten bewertet werden und über eine frei wählbare Dauer nach zumindest einem von mehreren vorgegebenen Kriterien bewertet werden, wobei die Rohdaten des Messkanals einer Fehlerisolationsstufe und anschließend einer Fehlerklassifikationsstufe zugeführt werden und anschließend ein Maß für die Güte der Messdaten des jeweiligen Messkanals ermittelt wird. Einen Zusammenhang zwischen Messdatenqualität und Bauteilschwankungen stellt dieses System jedoch nicht zur Verfügung.

Auch das in der DE 44 22 149 A1 angegebene Verfahren zur Auswertung von Signalen, bei dem das auszuwertende Signal mit einem zweiten Signal, das eine mittelwertfreie Sprungfunktion darstellt, gefaltet wird, und aus dem Verlauf des gefalteten Signals erkannt wird, ob ein erwartetes Ereignis stattgefunden hat, stellt diesen Zusammenhang nicht her. Denn durch den hier vorgesehenen Vergleich des aus der Faltung erhaltenen Signals mit zu erwartenden Mustern lassen sich zwar verschiedene Ereignisse erkennen und lokalisieren oder auch auf Plausibilität hin überprüfen, was grundsätzlich eine Diagnose bzw. Fehlererkennung möglich macht. Es ist jedoch nicht möglich, mit einem solchen Ansatz eine Fehlererkennung in Systemen zu gewährleisten, bei denen durch große Bauteilschwankungen, eine hohe, zur Fehlererkennung notwendige Signalvarianz erforderlich ist.

EP 1 630 383 A2 offenbart ein Verfahren zur Funktionsdiagnose mindestens einer Ladungsbewegungsklappe in einem Verbrennungsmotor eines Kraftfahrzeuges während des Betriebes des Verbrennungsmotors.

Es besteht also die Aufgabe, ein verbessertes Diagnoseverfahren zur Sprungerkennung einer kontinuierlichen Messgröße und eine Steuerung zur Durchführung eines solchen Verfahrens bereitzustellen, bei dem die oben genannten Nachteile wenigstens teilweise überwunden werden.

Diese Aufgabe wird durch das erfindungsgemäße Diagnoseverfahren gemäß Anspruch 1, die Steuerung nach Anspruch 12 und ein Fahrzeug nach Anspruch 15 gelöst.

Weitere vorteilhafte Ausgestaltungen der Erfindung ergeben sich aus den Unteransprüchen und der folgenden Beschreibung bevorzugter Ausführungsbeispiele der vorliegenden Erfindung.

Das erfindungsgemäße Verfahren zeichnet sich dadurch aus, dass hier ein Diagnoseverfahren zur Sprungerkennung einer kontinuierlichen Messgröße vorgesehen ist, das insbesondere die nachfolgenden Verfahrensschritte - gegebenenfalls auch in einer anderen Reihenfolge - umfasst:
- Erfassen eines Eingangssignals,
- Prüfen eines Sprungkriteriums anhand des Eingangssignals
- bei Vorliegen des Sprungkriteriums Freigabe einer Diagnose mit:
- Erfassen des Eingangssignals innerhalb einer Laufzeit ab einem Zeitpunkt - insbesondere ein Startzeitpunkt, an dem das Sprungkriterium vorliegt,
- Festlegen des Eingangssignals zu dem Zeitpunkt der Laufzeit als Referenzwert ausgehend von einer Ausgangsreferenzlage,
- Bestimmen des Verlaufs einer relativen Diagnosegröße durch Versetzen des Verlaufs des Eingangssignals um eine Referenzdifferenz zwischen Ausgangsreferenzlage und Referenzwert, wobei der Verlauf der relativen Diagnosegröße um die Referenzdifferenz angehoben wird, wenn der Referenzwert kleiner als die Ausgangsreferenzlage ist und um die Referenzdifferenz abgesenkt wird, wenn der Referenzwert größer als die Ausgangsreferenzlage ist;
- Vergleich des Verlaufs der relativen Diagnosegröße, mit einer Diagnoseschwelle und Prüfen eines Fehlerkriteriums, gemäß dem die relative Diagnosegröße die Diagnoseschwelle überschreitet.

Bei diesem Verfahren wird ein Eingangssignal oder eine Basisgröße in einem bestimmten Zeitraum von einem (Start)zeitpunkt an, also während einer bestimmten Laufzeit, erfasst und dessen Verlauf zu Diagnosezwecken ausgewertet.

Bei Vorliegen dieses Sprungkriteriums wird dann die eigentliche Diagnose freigegeben, die Folgendes umfasst: Das Eingangssignal wird innerhalb einer bestimmten Laufzeit ab einem Startzeitpunkt erfasst. Das Eingangssignal zu diesem Startzeitpunkt wird als Referenzwert relativ r zu einer Ausgangsreferenzlage, die auch eine Nulllage sein kann festgelegt. Davon ausgehend wird eine relative Diagnosegröße mit einer Diagnoseschwelle verglichen und ein Fehlerkriterium geprüft, gemäß dem die relative Diagnosegröße einen Diagnoseschwellwert überschreitet.

Der Verlauf der relativen Diagnosegröße entspricht dabei dem Verlauf des Eingangssignals. Es ist jedoch um die Referenzdifferenz korrigiert welche betragsmäßig der Differenz zwischen dem Eingangssignal am Startzeitpunkt - dem neuen Referenzwert - und der Ausgangsreferenzlage entspricht. Diese Referenzdifferenz entspricht also dem Abstand des Referenzwerts zur Ausgangsreferenzlage. Der Verlauf der relativen Diagnosegröße wird um die Referenzdifferenz angehoben, wenn der Referenzwert (Eingangssignal am Startzeitpunkt) kleiner als die Ausgangsreferenzlage ist, und wird um die Referenzdifferenz abgesenkt, wenn der Referenzwert größer als die Ausgangsreferenzlage ist. Die Referenzdifferenz zwischen der relativen Diagnosegröße und dem Eingangssignal korrigiert dabei eine unter Umständen bauteilbedingt vorhandene Abweichung zwischen einem idealen Bauteil und einem realen Bauteil und neutralisiert diese Abweichung (zum Beispiel eine Querschnittsabweichung in einer Drosselklappe). Damit ist die Sensitivität der relativen Diagnosegröße um den positiven oder negativen Versatz zum Eingangssignal erhöht.

So wird zum einen sichergestellt, dass diese Abweichung nicht in die Fehleranalyse mit einfließt, und zum anderen, dass ein anderer, im Diagnosezeitraum beobachteter Fehler, der beispielsweise einer Abweichung entspricht, die durch einen gezogenen Ölstab verursacht wird (erhöhter Strömungsquerschnitt), hinreichend genau diagnostiziert werden kann.

Dabei gibt es Verfahren, bei denen bei Vorliegen des Fehlerkriteriums innerhalb der Laufzeit eine Fehlerzustandsinformation, insbesondere ein Fehlerbit erzeugt wird. Diese Fehlerzustandsinformation oder ein Fehlerbit kann benutzt werden, um einen entsprechenden Warn- und/oder Fehlerkorrekturprozess einzuleiten (z.B. eine Fehleranzeige oder ein Nachjustieren eines Stellgliedes bzw. eine Umbedatung, um den erkannten Fehler auszugleichen.

Bei anderen Verfahren wird bei Nichtvorliegen des Fehlerkriteriums innerhalb der Laufzeit T das Diagnoseverfahren beendet. Bei diesem Verfahrensablauf wird erkannt, dass kein diagnostizierbarer Fehler vorliegt und es wird erneut die Änderungsrate des Eingangssignals beobachtet, bis zu einem späteren Zeitpunkt das Sprungkriterium erfüllt ist und der Diagnoseprozess erneut freigegeben wird.

Es gibt Verfahren, bei denen das Prüfen des Sprungkriteriums das Erfassen des Eingangssignals und das Bestimmen eines Signalkriteriums umfasst. Dabei können zum Prüfen des Sprungkriteriums unterschiedliche Eigenschaften des Eingangssignals genutzt werden (z.B. charakteristische Signalverläufe oder obere und untere Signalgrenzwerte, aber auch über einen Zeitraum gemittelte Werte).

Es gibt Verfahren, wobei ein Signalkriterium einer Änderungsrate des Eingangssignals entspricht. Damit können charakteristische Signalausschläge berücksichtigt werden, die in der Regel besonders deutlich auf einen Fehlerzustand bzw. ein verstärktes Diagnoseerfordernis hindeuten.

Es gibt Verfahren, bei denen dabei das Prüfen des Sprungkriteriums das Vergleichen der Änderungsrate mit einem ersten Schwellwert und Prüfen des Sprungkriteriums, gemäß dem die Änderungsrate den ersten Schwellwert überschreitet, umfasst. Der Vergleich der Änderungsrate mit einem ersten Schwellwert ist besonders geeignet, Signalausschläge in den gewünschten Grenzen zu betrachten und als Sprungkriterium heranzuziehen. Dabei kann die Änderungsrate entweder absolut, aber auch richtungsabhängig betrachtet werden. Also die Änderungsrate, die auftritt, wenn das eigentliche Signal Abweichungen nach oben oder nach unten aufweist.

Es gibt auch Verfahren, bei denen das Prüfen des Sprungkriteriums weitere Schritte aufweist, z.B.: das Erfassen eines zweiten Eingangssignals und Bestimmen eines weiteren Signalkriteriums oder auch das Prüfen des Sprungkriteriums anhand des weiteren Signalkriteriums. Damit können unterschiedliche Signale kombiniert werden, um durch die kombinierte Betrachtung ein Sprungkriterium zu erfassen. Dies erlaubt eine komplexere Betrachtung innerhalb des erfindungsgemäßen Diagnoseverfahrens.

Dabei gibt es Verfahren, bei denen das Sprungkriterium eines oder mehrere der folgenden Kriterien umfasst: einen charakteristischen Signalverlauf (z.B. ein bestimmtes Signalprofil), ein zyklisches Signalverhalten, bei dem z.B. charakteristische Wiederholungen im Signalverlauf festgestellt werden können, aber auch eine Kombination mehrerer Sprungkriterien, z.B. die Kombination eines zyklischen Signalverhaltens mit einem charakteristischen Signalverlauf oder einer spezifischen Schwellwertüberschreitung. Dabei können auch mehrere Signale kombiniert werden, so dass beispielsweise bei einem Signal ein charakteristischer Signalverlauf festgestellt wird und bei einem anderen eine charakteristische Schwellwertüberschreitung, die nur in einer bestimmten Kombination zum Erfüllen des Sprungkriteriums vorgesehen sind.

Es gibt auch Verfahren, bei dem das Diagnoseverfahren bei erneutem Vorliegen des Sprungkriteriums innerhalb der Laufzeit Folgendes umfasst:
Vergleichen des Eingangssignals zum Zeitpunkt, an dem das Sprungkriterium vorliegt, mit dem Referenzwert und Prüfen eines Rücksetzkriteriums, gemäß dem das Eingangssignal den Referenzwert unterschreitet. Bei Vorliegen des Rücksetzkriteriums wird dann das Eingangssignal zum Zeitpunkt des Rücksetzkriteriums als neuer Referenzwert relativ zum bestehenden Referenzwert festgelegt. Anschließend wird der Verlauf der relativen Diagnosegröße so aktualisiert, dass diese um die Differenz zwischen dem Referenzwert und dem ersten Referenzwert zur Diagnosegröße versetzt verläuft. Mit diesem Verlauf der relativen Diagnosegröße wird dann eine Diagnoseschwelle verglichen. Das Fehlerkriterium wird geprüft, gemäß dem die relative Diagnosegröße die Diagnoseschwelle überschreitet.

Liegt dagegen das Rücksetzkriterium nicht vor, wird der Vergleich des unveränderten relativen Diagnosegrößenverlaufs mit der Diagnoseschwelle zum Prüfen des Fehlerkriteriums fortgesetzt, gemäß dem die relative Diagnosegröße die Diagnoseschwelle überschreitet.

Dieses Verfahren kommt dann zur Anwendung, wenn sich das Eingangssignal weiter vom Diagnoseschwellwert entfernt hat. Das Verfahren ist erforderlich, da das erste Auslöseevent (erfülltes Sprungkriterium) nicht auf ein Fehlerereignis zurückzuführen ist. Zusätzlich wird zur Gewährleistung einer ausreichenden Diagnoselaufzeit die Diagnose bei Vorliegen des Sprungkriteriums jedes Mal neu gestartet. Damit wird sichergestellt, dass für die eigentliche Fehlerdiagnose ein genügend langer Zeitraum zur Verfügung steht.

Es gibt Verfahren, bei denen der erste Schwellwert die Laufzeit und/oder die Diagnoseschwelle einstellbar sind. Damit kann das Verfahren an die Diagnoserahmenbedingungen angepasst werden. Diese unterschiedlichen Werte können beispielsweise von der Wahl bestimmter Komponenten und vom Aufbau oder Zustand der betrachteten Systeme abhängen (z.B. Bauteiltoleranzen von Drosselklappen, Alterungseffekte, Betriebsgrößen, Betriebseinflussgrößen wie Umgebungs- oder Betriebstemperaturen).

Es gibt auch Verfahren, bei denen das Erfassen des Eingangssignals wahlweise Folgendes umfasst: Vergleichen des Eingangssignals mit einem unteren und/oder oberen Grenzwert sowie Prüfen eines Plausibilitätskriteriums (z.B. zyklische Veränderungen) anhand der Änderungsrate und/oder eines Verlaufsprofils des Eingangssignals. Damit kann das Diagnosekriterium nicht nur beim Überschreiten eines bestimmten Schwellwertes, sondern bei anderen Verlaufscharakteristika des Eingangssignals festgelegt werden. Das Verfahren wird damit insgesamt flexibilisiert und kann auf unterschiedliche Fehleranalysesysteme angepasst werden.

Eine Steuerung eines Verbrennungsmotors, die zum Ausführen des erfindungsgemäßen Diagnoseverfahrens eingerichtet ist, erlaubt es das oben geschilderte allgemeines Diagnoseverfahren speziell auf dem Gebiet von Verbrennungsmotoren anzuwenden. Dabei werden insbesondere Eingangssignale einer Temperatur-, einer Druck- und/oder einer Massenstromgröße in einer Saugrohranordnung betrachtet. Diese Größen bieten sich an, da die Saugrohrmodellierung besonders komplex und empfindlich ist und einen sehr großen Einfluss auf den Betriebszustand des Verbrennungsmotors hat.

Es gibt Steuerungen, bei denen das Diagnoseverfahren eingesetzt wird, um einen Fehlerzustand zu erkennen, der eine Leckage in der Saugrohranordnung angibt. Dies ist sinnvoll, da Leckagen im Saugrohrsystem einen besonders schwerwiegenden Störfaktor darstellen und sich unmittelbar auf den Betriebszustand des Motors auswirken.

Dabei gibt es auch Steuerungen, bei denen die Leckage durch einen gezogenen Ölpeilstab verursacht wird. Damit ist es möglich, ohne einen zusätzlichen Detektor das ordnungsgemäße Vorhandensein eines Ölstabs zu detektieren und zuverlässig eine entsprechende Fehlermeldung oder ein Signal an den Fahrer abzugeben.

Fahrzeuge mit einem Verbrennungsmotor und einer zur Ausführung des erfindungsgemäßen Verfahrens geeigneten Steuerung erlauben einen zuverlässigen Betrieb, und können kostengünstig auch unter Verwendung von Bauteilen mit relativ hohen Fertigungstoleranzen hergestellt werden. Durch das erfindungsgemäße Diagnoseverfahren könne solche Toleranzen zum Teil kompensiert werden, ohne dass die Fähigkeit zur zuverlässigen Fehlerdiagnose dadurch negativ beeinflusst würde.

Ausführungsbeispiele der Erfindung werden nun beispielhaft und unter Bezugnahme auf die beigefügte Zeichnung beschrieben. Dabei zeigt:
- Fig. 1: den schematischen Ablauf eines Ausführungsbeispiels des Verfahrens gemäß der vorliegenden Erfindung;
- Fig. 2: eine schematische Darstellung der Diagnoseaktivierung;
- Fig. 3: eine schematische Darstellung der Bedingungen für eine Referenzwertaktualisierung;
- Fig. 4: ein Signaldiagramm, welches den Signalverlauf zeigt, bei dem ein Fehlerzustand erkannt wird;
- Fig. 5: ein Signaldiagramm, welches den Signalverlauf zeigt, bei dem kein Fehlerzustand erkannt wurde;
- Fig. 6: ein Signaldiagramm, welches einen Signalverlauf zeigt, bei dem der Referenzwert aktualisiert wird und anschließend ein Fehler erkannt wird;
- Fig. 7: ein Signaldiagramm, welches einen Signalverlauf zeigt, bei dem das Diagnosefenster ohne Aktualisierung des Referenzwertes verlängert wird und anschließend ein Fehlerwert erkannt wird;
- Fig.8.: schematisch ein Fahrzeug mit einem Verbrennungsmotor und einer Steuerung zur Ausführung des erfindungsgemäßen Verfahrens und
- Fig. 9: einen beispielhaften Ablaufplan das erfindungsgemäße Verfahren mit den Schritten 1 bis 7.

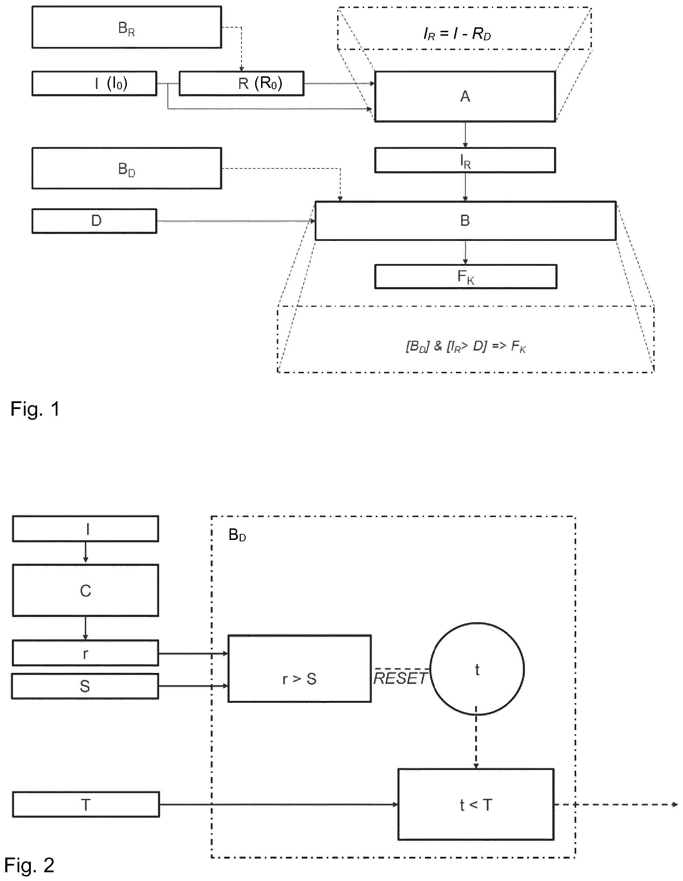

Fig. 1 zeigt die Kernkomponenten des erfindungsgemäßen Sprungevent-basierten Diagnoseverfahrens. Es umfasst die Blöcke A und B, wobei im Block A die relative Diagnosegröße I_{R} berechnet wird und in Block B die eigentliche Schwellwertprüfung vorgenommen wird wenn die Bedingung zur Aktivierung der Diagnose B_{D} erfüllt ist (vergleiche Figur 2). Zur Schwellwertprüfung dient die relative Diagnosegröße I_{R} und als Diagnoseschwelle der Schwellwert D. Ergebnis der Schwellwertprüfung B ist die Diagnose eines Fehlerzustands oder Fehlerkriteriums F_{K}, das dann festgestellt wird, wenn in der Schwellwertprüfung festgestellt wird, dass der Verlauf relativen Diagnosegröße I_{R} die Diagnoseschwelle D überschreitet bzw. damit die Bedingung B_{D} erfüllt ist (siehe auch Fig. 2).

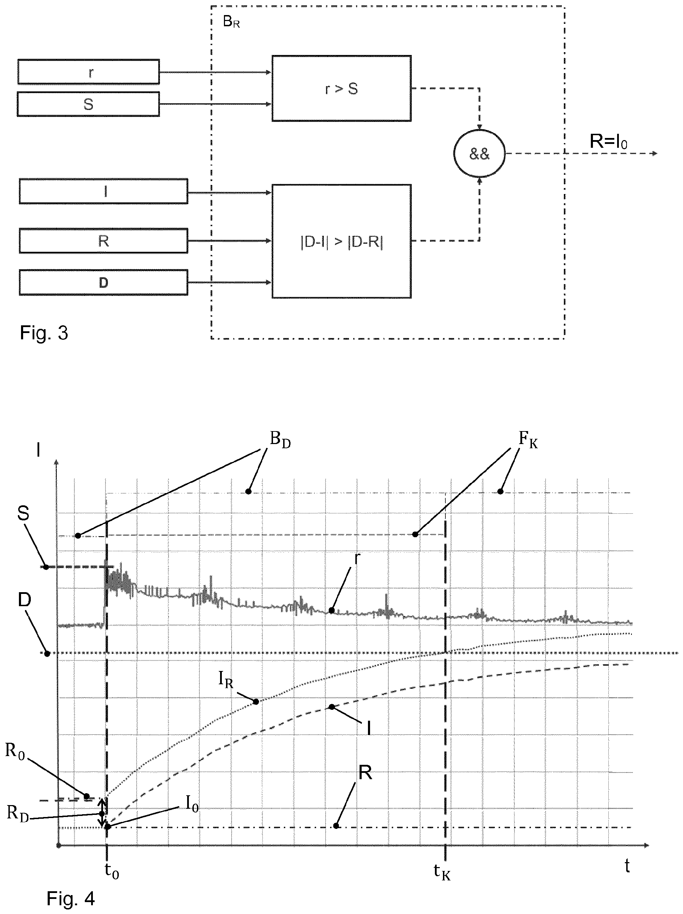

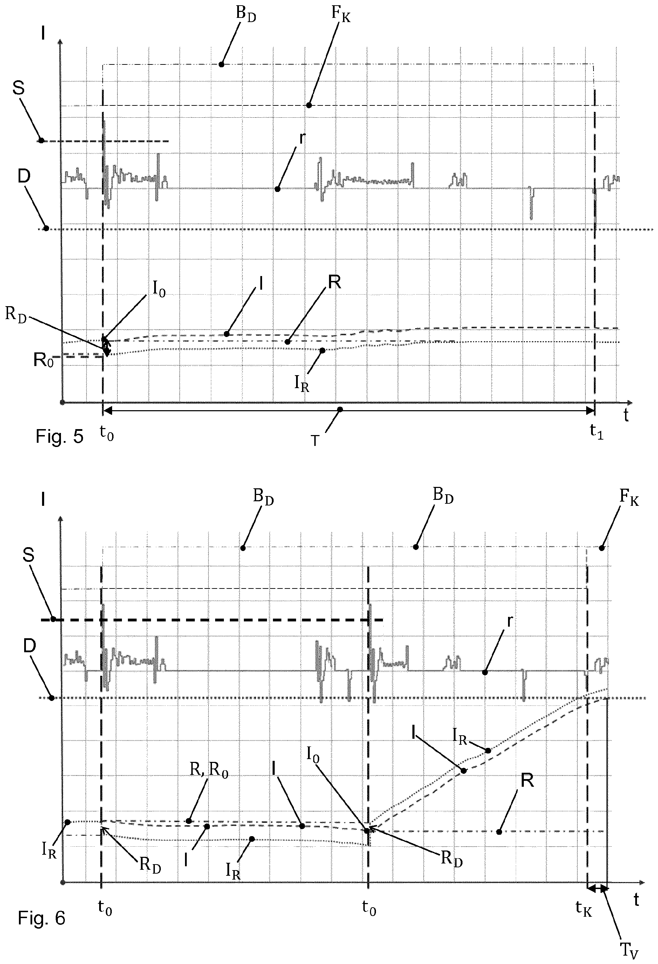

Weiter wird in Block A die relative Diagnosegröße I_{R} berechnet, wenn die Bedingungen für die Referenzwertaktualisierung (Block B_{R}) erfüllt sind, indem das Eingangssignal I um eine Referenzdifferenz R_{D} korrigiert (angehoben oder abgesenkt) wird. Dabei werden die Größen I mit I₀ und R mit R₀ berücksichtigt. Dabei ergibt sich die Referenzdifferenz R_{D} aus Differenz zwischen dem Eingangswert I₀, und dem Ausgangsreferenzwert R₀.. Dabei wird die Lage des Ausgangsreferenzwertes R₀ zum Eingangswert I₀ so berücksichtigt, dass das Eingangssignal I um die Referenzdifferenz R_{D} abgesenkt (R₀ < I₀) oder angehoben (R₀ > I₀) wird (vgl. Fig. 5 bzw. Fig. 4). So erhält man dann ein um diese Referenzdifferenz R_{D} korrigierte Größe (Eingangssignal I), nämlich die relative Diagnosegröße I_{R}.

Fig. 2 zeigt die Bedingung B_{D} für die Aktivierung der Diagnose (vgl. Block B_{D} in Fig. 1). Dazu wird Folgendes berücksichtigt: Aus dem Verlauf des Eingangssignals I wird im Block C die Änderungsrate r des Signals berechnet. Weiter berücksichtigt werden ein Schwellwert S und ein den Diagnosezeitraum bzw. die Laufzeit T kennzeichnender Schwellwert. Sowohl die Laufzeit T als auch der Schwellwert S können systemspezifisch gewählt oder betriebszustandsabhängig bestimmt werden. Für die Aktivierung der Diagnose, im strichpunktiertem Rahmen dargestellt, gelten weiter die Bedingungen, dass die Änderungsrate r den Schwellwert S überschreitet. In diesem Fall wird eine Laufzeit t gestartet und die Diagnose wird so lange aktiviert, solange die Laufzeit t die Laufzeit T unterschreitet. Die Diagnose wird jedes Mal dann zu einem Zeitpunkt to aktiviert, wenn das Sprungkriterium B_{D} (entspricht der Bedingung BD) erfüllt wird, nämlich dann, wenn die Änderungsrate r den Schwellwert S überschreitet. Dabei wir die Laufzeit T jedes Mal neu gestartet, so dass für die Diagnose jeweils der gesamte Zeitraum T zur Verfügung steht.

Fig. 3 zeigt die Bedingungen für die Referenzwertaktualisierung in Block B_{R} (siehe auch Fig. 1). Dazu gilt Folgendes: Eine Referenzwertaktualisierung findet nur dann statt, wenn die Bedingungen für eine Aktivierung der Diagnose erfüllt ist, nämlich, dass die Änderungsrate r einen Schwellwert S überschreitet. In einer alternativen Ausführung kann ein Schwellwert S₂, der zur Aktualisierung eines Referenzwertes erforderlich ist, auch von einem Schwellwert S₁, der zur Aktivierung der Diagnose an sich erforderlich ist, abweichen. Dann gilt: S₂ ≠ S₁.

Weiter gilt optional zusätzlich die Bedingung, dass der betragsmäßige Abstand zwischen dem Eingangssignal I und dem Diagnoseschwellwert D größer ist als der Abstand zwischen dem letzten Referenzwert Ro (Referenzwert vor Überschreitung des Schwellwerts S) und dem Diagnoseschwellwert D. In diesem Fall wird der Eingangssignalwert I₀ zum aktualisierten Referenzwert R. Dieser aktualisierte Referenzwert dient dann auch weiter zur Bestimmung der Referenzdifferenz R_{D}, also des Abstandes der relativen Diagnosegröße I_{R} zum Eingangssignal I.

Das in Fig. 4 dargestellte Diagramm zeigt diesen Fall. In dem Diagramm sind über die Zeit die Verläufe des Eingangssignals I, der relativen Diagnosegröße I_{R} (untere Diagrammhälfte) und der Änderungsrate r (obere Diagrammhälfte) dargestellt. Zu einem Zeitpunkt t₀ überschreitet die Änderungsrate r einen Schwellwert S (im vorliegenden Fall sind die Schwellwerte S₁ und S₂ gleich) und löst damit das Starten des Timers aus und erzeugt ein Schaltbit B_{D} zur Freigabe der Diagnose.

Das Eingangssignal I₀ zum Zeitpunkt to liegt unterhalb des geltenden Referenzwertes Ro oder der Nulllage für die Diagnosegröße. Für diesen Zustand sind hier die beiden Bedingungen für die Aktualisierung des Referenzwertes (vgl. Fig. 3) erfüllt, nämlich erstens, dass der betragsmäßige Wert der Differenz zwischen dem Eingangssignal I (also hier der Wert I₀) zum Zeitpunkt to und der Diagnoseschwelle D größer ist als die betragsmäßige Differenz zwischen dem Ausgangsreferenzwert Ro oder der Nulllage Ro und dem Diagnoseschwellwert D und zweitens, dass die Änderungsrate r den Schwellwert S überschreitet. Der Ausgangsreferenzwert Ro wird daher zum Zeitpunkt to bei Beginn der Diagnose neu auf den Wert I₀ festgelegt, der den neuen Referenzwert R bildet.. Da dieser Wert betragsmäßig unterhalb des Ausgangsreferenzwertes Ro liegt, wird die relative Diagnosegröße I_{R} um diese Referenzdifferenz R_{D} angehoben. So wird eine möglichweise bauteilbedingte Veränderung des Signalverlaufs berücksichtigt und bei der Festlegung der relativen Diagnosegröße I_{R} berücksichtigt. (Die Empfindlichkeit wird um die Referenzdifferenz R_{D} zwischen dem Ausgangsreferenzwert R₀ und dem aktualisierten Referenzwert R erhöht). Der Verlauf der relativen Diagnosegröße I_{R} wird nun innerhalb der Laufzeit T verfolgt und das Fehlerkriterium F_{K} wird zu einem Zeitpunkt t_{K} festgestellt. Hier überschreitet nämlich der Verlauf der relativen Diagnosegröße I_{R} die Diagnoseschwelle D und es wird eine Fehlerzustandsinformation erzeugt, die im Diagramm als Fehlerbit F_{K} dargestellt wird.

Das Diagramm zeigt auch die Wirkung des Referenzdifferenz R_{D}. Ohne Berücksichtigung des korrigierten oder angepassten Referenzwertes R bei der Bestimmung der Referenzdifferenz R_{D} bei der Bestimmung der relativen Diagnosegröße I_{R} würde bei unveränderter Betrachtung des Signalverlaufs des Signalverlaufs I kein Fehler detektiert, da dieser Verlauf unter der Diagnoseschwelle D bleibt. Der Fehlerzustand bliebe unentdeckt.

In Fig. 5 ist ein Fall dargestellt, bei dem ebenfalls die Änderungsrate r den Schwellwert S überschreitet und die Diagnose zu einem Zeitpunkt t₀ gestartet wird. Die zweite optionale Bedingung, dass der betragsmäßige Abstand zwischen dem Eingangssignal I und dem Diagnoseschwellwert D größer ist als der Abstand zwischen dem letzten Referenzwert Ro (Referenzwert vor Überschreitung des Schwellwerts S) und dem Diagnoseschwellwert D, ist hier nicht erfüllt. Hier wird trotzdem die relative Diagnosegröße I_{R} nach unten korrigiert, da der Referenzwert R₀ unterhalb des Eingangssignals I₀ zum Zeitpunkt t₀ liegt. Damit besteht eine positive Abweichung, die dazu führt, dass das Eingangssignal um die Referenzdifferenz R_{D} nach unten verschoben wird, nämlich auf die relative Diagnosegröße I_{R}, die um den Betrag I₀-R_{D} unterhalb des Verlaufs des Eingangssignals I verläuft. Im weiteren Verlauf gelangt die relative Diagnosegröße I_{R} nicht über die Diagnoseschwelle D und dass Diagnoseverfahren wird zum Zeitpunkt t₁ bzw. bei Überschreiten der Laufzeit T beendet und das Freigabebit zur Diagnose wird zurückgesetzt, ein Fehlerbit wird nicht gesetzt. Es wird kein Fehlerzustand erkannt.

Fig. 6 zeigt einen Fall mit gleicher Ausgangslage, wie in Fig. 5, bei dem das Diagnoseverfahren bei einem ersten Zeitpunkt to in Gang gesetzt wird, die relative Diagnosegröße I_{R} neu bestimmt wird und zunächst keine Überschreitung der Diagnoseschwelle stattfindet (gleiche Situation wie in Fig. 5).

Im weiteren Diagnoseverlauf kommt es jedoch zu einer erneuten Überschreitung der Schwelle S durch die Änderungsrate r zu einem späteren Zeitpunkt to. Zu diesem Zeitpunkt to ist das Eingangssignal I unter den bisherigen Referenzwert Ro abgesunken und es gilt zusätzlich die Bedingung, dass der Abstand zwischen Eingangssignal I und Diagnoseschwelle D zu diesem Zeitpunkt t₀ größer ist als der Abstand zwischen Diagnoseschwelle D und Referenzwert R₀. Dies führt dazu, dass der Referenzwert R aktualisiert wird und zwar auf den Wert I₀ zum neuen Zeitpunkt t₀, an dem die Diagnose erneut gestartet wird. Die relative Diagnosegröße I_{R} wird um die Abweichung zwischen dem vorherigen Referenzwert R₀ und dem Wert I₀ bzw. dem neuen Referenzwert R, die Referenzdifferenz R_{D}, nach oben korrigiert.

Im nachfolgenden Diagnosezeitraum T überschreitet dann die relative Diagnosegröße I_{R} wieder die Diagnoseschwelle D und ein Fehlerbit F_{K} wird gesetzt. Dieses Beispiel zeigt, wie das Weglaufen des Eingangssignals I vom ursprünglichen Referenzwert Ro durch die Korrektur beim erneuten Start des Diagnoseverfahrens ausgeglichen wird und so eine sensiblere Berücksichtigung der Diagnoseschwelle D durch den relativen Diagnosewert I_{R} möglich ist. Ohne die Korrektur würde das Fehlerkriterium erst zu einem späteren Zeitpunkt erfüllt werden (bei reiner Berücksichtigung des Eingangssignals I). Das Fehlerbit würde also gar nicht oder; wie im vorliegenden Fall, erst verspätet nach einer Verzögerung Tv gesetzt werden.

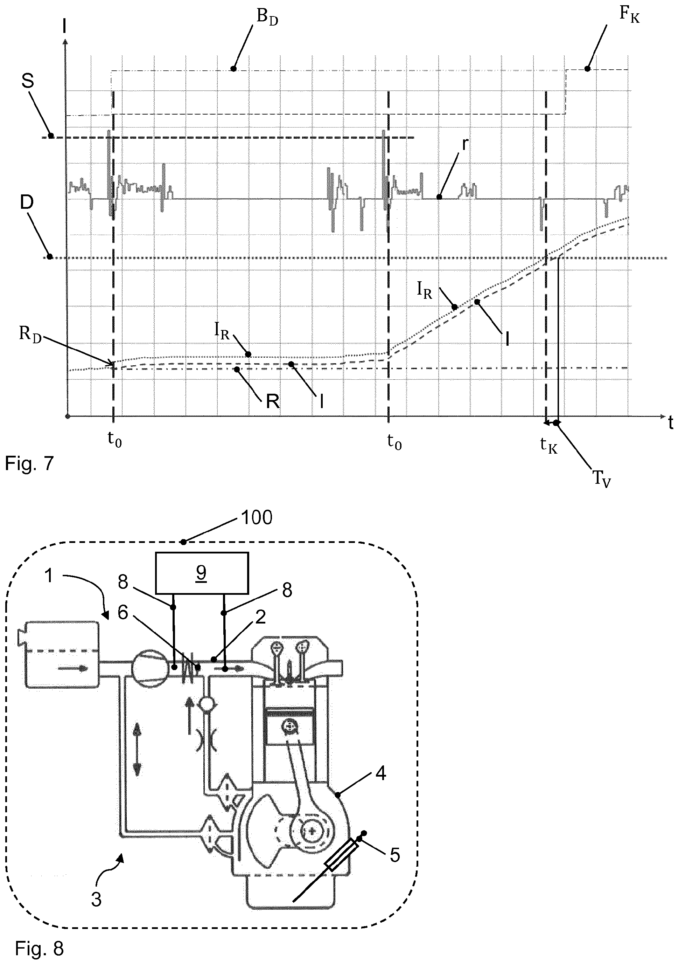

Fig. 7 zeigt einen weiteren Fall, bei dem ebenfalls während der Laufzeit T, also während der Diagnose, erneut der Schwellwert S für die Änderungsrate r überschritten wird und eine neue Laufzeit T zu einem neuen Zeitpunkt t₀ gestartet wird. Hier ist jedoch die Bedingung für ein Anpassen des Referenzwertes R nicht erfüllt, da der absolute Abstand zwischen dem Referenzwert R und der Diagnoseschwelle D nach wie vor größer ist als der zwischen dem Eingangssignal I und der Diagnoseschwelle D. Damit wird die relative Diagnosegröße I_{R} weiter um den ursprünglichen Wert der Referenzdifferenz R_{D} zum Eingangssignal I versetzt geführt und mit der Diagnoseschwelle D verglichen. Das Diagramm zeigt, dass hier die Empfindlichkeit weiterhin erhöht bleibt und die Diagnoseschwelle D durch die relative Diagnosegröße I_{R} ebenfalls zu einem früheren Zeitpunkt überschritten wird, als dies bei einer reinen Beobachtung des Eingangssignals I der Fall wäre.

Fig. 8 weist eine schematische Darstellung eines Verbrennungsmotors 1 auf, mit einem Saugrohr 2, der über ein Kurbelgehäuseentlüftungssystem 3 mit dem Kurbelgehäuse 4 verbunden ist. Im Kurbelgehäuse 4 steckt ein Peilstab 5, dessen Vorhandensein bzw. Nichtvorhandensein die Druckverhältnisse im Saugrohrbereich 2 erheblich beeinflusst und insbesondere die dort vorliegenden Druckverhältnisse vor und hinter einer Drosselklappe 6 bestimmt, die beispielsweise über Sensoren 8 erfasst werden können, die mit einer Motorsteuerung 9 verbunden sind und die über die Sensorwerte eine entsprechende Stellung der Drosselklappe überwachen und regeln kann. Weiter ist die Steuerung 9 dazu ausgelegt, dass oben beschriebene Verfahren, das anhand der Figuren 1 bis 7 erläutert wurde, durchzuführen. Die strichpunktierte Linie um den schematisch dargestellten Motor kennzeichnet ein Kraftfahrzeug 100, das mit einem solchen Motor 1 ausgestattet ist, der wiederum mit einer Steuerung 9 versehen ist, die ausgebildet ist, das erfindungsgemäße Verfahren auszuführen.

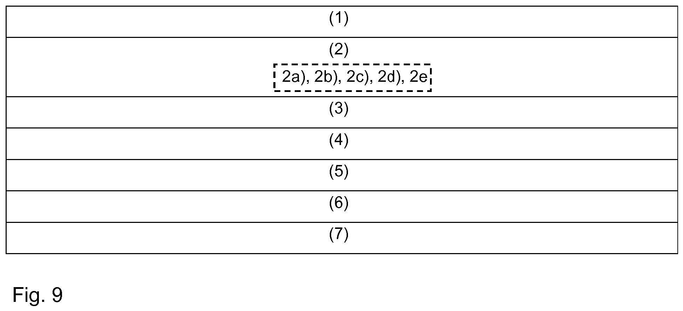

Figur 9 zeigt das erfindungsgemäße Verfahren mit den Schritten 1 bis 7, die auch in einer anderen Reihenfolge ausführbar sind:
(1) Erfassen eines Eingangssignals (I),
(2) Prüfen eines Sprungkriteriums (B_{D}) anhand des Eingangssignals (I),
(3) bei Vorliegen des Sprungkriteriums (B_{D}), Freigabe einer Diagnose mit:
(4) Erfassen des Eingangssignals (I) innerhalb einer Laufzeit (T) ab einem Zeitpunkt (to),
(5) Festlegen des Eingangssignals (I₀) zu dem Zeitpunkt to der Laufzeit (T) als Referenzwert (R) ausgehend von einer Ausgangsreferenzlage (Ro),
(6) Bestimmen des Verlaufs einer relativen Diagnosegröße (I_{R}) durch Versetzen des Verlaufs des Eingangssignals (I) um die Referenzdifferenz (R_{D}) zwischen Ausgangsreferenzlage (R₀) und Referenzwert (R), wobei der Verlauf der relativen Diagnosegröße (I_{R}) um die Referenzdifferenz (R_{D}) angehoben wird, wenn der Referenzwert (I₀; R) kleiner als die Ausgangsreferenzlage (R₀) ist und um die Referenzdifferenz (R_{D}) abgesenkt wird, wenn der Referenzwert (lₒ; R) größer als die Ausgangsreferenzlage (R₀) ist;
(7) Vergleich des Verlaufs der relativen Diagnosegröße (I_{R}), mit einer Diagnoseschwelle (D) und Prüfen eines Fehlerkriteriums (F_{K}), gemäß dem die relative Diagnosegröße (I_{R}) die Diagnoseschwelle (D) überschreitet.

Der Schritt 2 kann alternativ optional oder in Kombination eines der folgenden Merkmale (gestrichelter Kasten) aufweisen:
2a) das Erfassen des Eingangssignals I und das Bestimmen eines Signalkriteriums,
2b) dabei kann das Signalkriterium einer Änderungsrate r des Eingangssignals i entsprechen und
2c) wobei das Prüfen des Sprungkriteriums B_{D} aufweist: Vergleichen der Änderungsrate r mit einem ersten Schwellwert S und Prüfen des Sprungkriteriums B_{D}, gemäß dem die Änderungsrate r den ersten Schwellwert S überschreitet.

Weitere optionale bzw. ergänzende Schritte sind:
2d) Erfassen eines zweiten Eingangssignals und Bestimmen eines weiteren Signalkriteriums
2e) Prüfen des Sprungkriteriums anhand des weiteren Signalkriteriums. Dabei kann das Sprungkriterium eines der folgenden Kriterien umfassen: z.B. einen charakteristischen Signalverlauf, ein zyklisches Signalverhalten und/oder eine Kombination mehrerer Sprungkriterien, wobei das oben Gesagte sowohl für Einzelsignale als auch für mehrere Signale gilt, die zum Bestimmen des Sprungkriteriums herangezogen werden können.

### Bezugszeichenliste

- A: Berechnung der relativen Diagnosegröße I_{R}
- B: Schwellwertprüfung zur Bestimmung des Fehlerkriteriums F_{K}
- I_{R}: Relative Diagnosegröße; relativer Diagnosewert
- D: Diagnoseschwelle; Schwellwert
- F_{K}: Fehlerkriterium; Fehlerbit
- B_{R}: Bedingung Referenzwertaktualisierung
- B_{D}: Bedingung Diagnose aktivieren/Sprungkriterium
- I: Eingangssignal
- I_{R}: Diagnosegröße
- R: Referenzwert
- Ro: Ausgangsreferenzlage, Referenzwert
- I₀: Eingangswert
- R_{D}: Referenzdifferenz
- C: Berechnung der Änderungsrate
- S: Schwellwert (Änderungsrate)
- T: Laufzeit
- r: Änderungsrate des Eingangssignals
- t₀: Startzeitpunkt
- t₁: Endzeitpunkt (Diagnoseende)
- Tv: Verzögerung
- 100: Kraftfahrzeug
- 1: Verbrennungsmotor
- 2: Saugrohr
- 3: Kurbelgehäuseentlüftungssystem
- 4: Kurbelgehäuse
- 5: Peilstab
- 6: Drosselklappe
- 8: Sensor
- 9: Motorsteuerung

## Patentansprüche

1. Diagnoseverfahren zur Sprungerkennung einer kontinuierlichen Messgröße mit:
- Erfassen eines Eingangssignals (I),
- Prüfen eines Sprungkriteriums (B_{D}) anhand des Eingangssignals (I),
- bei Vorliegen des Sprungkriteriums (B_{D}), Freigabe einer Diagnose mit:
- Erfassen des Eingangssignals (I) innerhalb einer Laufzeit (T) ab einem Zeitpunkt (t₀),
- Festlegen des Eingangssignals (I₀) zu dem Zeitpunkt to der Laufzeit (T) als Referenzwert (R) ausgehend von einer Ausgangsreferenzlage (Ro),
- Bestimmen des Verlaufs einer relativen Diagnosegröße (I_{R}) durch Versetzen des Verlaufs des Eingangssignals (I) um eine Referenzdifferenz (R_{D}) zwischen Ausgangsreferenzlage (Ro) und Referenzwert (R), wobei der Verlauf der relativen Diagnosegröße (I_{R}) um die Referenzdifferenz (R_{D}) angehoben wird, wenn der Referenzwert (I₀; R) kleiner als die Ausgangsreferenzlage (Ro) ist und um die Referenzdifferenz (R_{D}) abgesenkt wird, wenn der Referenzwert (I₀; R) größer als die Ausgangsreferenzlage (R₀) ist;
- Vergleich des Verlaufs der relativen Diagnosegröße (I_{R}), mit einer Diagnoseschwelle (D) und Prüfen eines Fehlerkriteriums (F_{K}), gemäß dem die relative Diagnosegröße (I_{R}) die Diagnoseschwelle (D) überschreitet.

2. Diagnoseverfahren nach Anspruch 1, wobei
- bei Vorliegen des Fehlerkriteriums (F_{K}) innerhalb der Laufzeit (T) eine Fehlerzustandsinformation, insbesondere ein Fehlerbit erzeugt wird.

3. Diagnoseverfahren nach Anspruch 1, wobei
- bei Nicht-Vorliegen des Fehlerkriteriums (F_{K}) innerhalb der Laufzeit (T) das Diagnoseverfahren beendet wird.

4. Diagnoseverfahren nach Anspruch 1, 2 oder 3, wobei das Prüfen des Sprungkriteriums (B_{D}) das Erfassen des Eingangssignals (I) und das Bestimmen eines Signalkriteriums umfasst.

5. Diagnoseverfahren nach Anspruch 4 wobei das Signalkriterium einer Änderungsrate (r) des Eingangssignals (I) entspricht.

6. Diagnoseverfahren nach Anspruch 5, wobei das Prüfen des Sprungkriteriums (B_{D}) aufweist: Vergleichen der Änderungsrate (r) mit einem ersten Schwellwert (S) und Prüfen des Sprungkriteriums (B_{D}), gemäß dem die Änderungsrate (r) den ersten Schwellwert (S) überschreitet.

7. Diagnoseverfahren nach Anspruch 4, wobei das Prüfen des Sprungkriteriums (B_{D}) einen der folgenden Schritte aufweist:
- Erfassen eines zweiten Eingangssignals und Bestimmen eines weiteren Signalkriteriums;
- Prüfen des Sprungkriteriums anhand des weiteren Signalkriteriums.

8. Diagnoseverfahren nach Anspruch 4 oder 7 wobei das Sprungkriterium eines der folgenden Kriterien umfasst:
- einen charakteristischen Signalverlauf
- ein zyklisches Signalverhalten
- eine Kombination mehrerer Sprungkriterien

9. Diagnoseverfahren, nach Anspruch 1, das bei erneutem Vorliegen des Sprungkriteriums innerhalb der Laufzeit (T) zu einem neuen Zeitpunkt (to) folgendes umfasst:
- Vergleich des Eingangssignals (I₀) zum neuen Zeitpunkt (to) mit dem Referenzwert (R) als Ausgangsreferenzlage (Ro) und Prüfen eines Rücksetzkriteriums, gemäß dem das Eingangssignal (I₀) die Ausgangsreferenzlage (Ro) unterschreitet,
- bei Vorliegen des Rücksetzkriteriums
- Festlegen des Eingangssignals (I₀) zum neuen Zeitpunkt t₀ der Laufzeit (T) als neuen Referenzwert (R) relativ zur Ausgangsreferenzlage (R₀),
- Aktualisieren des Verlaufs der relativen Diagnosegröße (I_{R}), so dass dieser um die Referenzdifferenz (R_{D}) zwischen der Ausgangsreferenzlage (R₀) und dem neuen Referenzwert (Iₒ; R) zur Diagnosegröße (I_{R}) versetzt verläuft.
- Fortsetzen des Vergleichs des Verlaufs der relativen Diagnosegröße (I_{R}) mit der Diagnoseschwelle (D) und Prüfen des Fehlerkriteriums, gemäß dem die relative Diagnosegröße (I_{R}) die Diagnoseschwelle (D) überschreitet, oder
- bei Nicht-Vorliegen des Rücksetzkriteriums Fortsetzen des Vergleichs des Verlaufs der relativen Diagnosegröße (I_{R}) mit der Diagnoseschwelle (D) und Prüfen des Fehlerkriteriums, gemäß dem die relative Diagnosegröße (I_{R}) eine Diagnoseschwelle (D) überschreitet.

10. Diagnoseverfahren, nach Anspruch 6, wobei der erste Schwellwert (S), die Laufzeit (T) und/oder die Diagnoseschwelle (D) einstellbar sind.

11. Diagnoseverfahren, nach einem der vorhergehenden Ansprüche, wobei das Erfassen des Eingangssignals (I) wahlweise folgendes umfasst:
- Vergleichen des Eingangssignals (I) mit einem unteren und/oder oberen Grenzwert,
- Prüfen eines Plausibilitätskriteriums anhand der Änderungsrate (r) und/oder eines Verlaufsprofils des Eingangssignals (I).

12. Steuerung (9) eines Verbrennungsmotors (1), die zum Ausführen eines Diagnoseverfahrens nach einem der Ansprüche 1 bis 10 eingerichtet ist, wobei das Eingangssignal (I) einer Druck-, einer Temperatur- und/oder einer Massenstromgröße in einer Saugrohranordnung (2) entspricht.

13. Steuerung (9) nach Anspruch 12, wobei das Diagnoseverfahren zur Diagnose eines Fehlerzustands zur Detektion einer Leckage in der Saugrohranordnung (2) angewendet wird.

14. Steuerung (9) nach Anspruch 13, wobei die Leckage durch einen gezogenen Ölpeilstab (5) und/oder einen fehlerhaften Verschluss verursacht wird.

15. Fahrzeug (100) mit einem Verbrennungsmotor (1) und einer Steuerung (9) nach einem der Ansprüche 12 bis 14.

## Claims

1. Diagnostic method for detecting discontinuities in a continuous measurement variable, comprising:
- detecting an input signal (I),
- testing a discontinuity criterion (B_{D}) on the basis of the input signal (I),
- enabling a diagnosis when the discontinuity criterion (B_{D}) is met: comprising:
- detecting the input signal (I) within a propagation time (T) starting from a time (to),
- defining the input signal (I₀) at the time to of the propagation time (T) as a reference value (R) starting from an initial reference position (Ro),
- determining the curve of a relative diagnostic variable (I_{R}) by shifting the curve of the input signal (I) by a reference difference (R₀) between the initial reference position (Ro) and the reference value (R), wherein the curve of the relative diagnostic variable (I_{R}) is increased by the reference difference (R₀) if the reference value (I₀; R) is lower than the initial reference position (Ro), and is decreased by the reference difference (R₀) if the reference value (I₀; R) is higher than the initial reference position (Ro);
- comparing the curve of the relative diagnostic variable (I_{R}) with a diagnostic threshold (D), and testing an error criterion (F_{K}) according to which the relative diagnostic variable (I_{R}) exceeds the diagnostic threshold (D).

2. Diagnostic method according to claim 1, wherein
- when the error criterion (F_{K}) is met within the propagation time (T), an item of error-state information, in particular an error bit, is generated.

3. Diagnostic method according to claim 1, wherein
- if the error criterion (F_{K}) is not met within the propagation time (T), the diagnostic method is terminated.

4. Diagnostic method according to claim 1, 2 or 3, wherein the testing of the discontinuity criterion (B_{D}) comprises detecting the input signal (I) and determining a signal criterion.

5. Diagnostic method according to claim 4, wherein the signal criterion corresponds to a change rate (r) of the input signal (I).

6. Diagnostic method according to claim 5, wherein the testing of the discontinuity criterion (B_{D}) comprises: comparing the change rate (r) with a first threshold value (S) and testing the discontinuity criterion (B_{D}) according to which the change rate (r) exceeds the first threshold value (S).

7. Diagnostic method according to claim 4, wherein the testing of the discontinuity criterion (B_{D}) comprises one of the following steps:
- detecting a second input signal and determining a further signal criterion;
- testing the discontinuity criterion on the basis of the further signal criterion.

8. Diagnostic method according to either claim 4 or claim 7, wherein the discontinuity criterion comprises one of the following criteria:
- a characteristic signal curve
- a cyclic signal behavior
- a combination of a plurality of discontinuity criteria.

9. Diagnostic method according to claim 1, which, when the discontinuity criterion is met again within the propagation time (T) at a new time (to), comprises the following:
- comparing the input signal (I₀) at the new time (to) with the reference value (R) as the initial reference position (Ro), and testing a reset criterion according to which the input signal (I₀) falls below the initial reference position (Ro),
- when the reset criterion is met
- defining the input signal (I₀) at the new time to of the propagation time (T) as a new reference value (R) relative to the initial reference position (Ro),
- updating the curve of the relative diagnostic variable (I_{R}) such that it runs in a manner offset from the diagnostic variable (I_{R}) by the reference difference (R₀) between the initial reference position (Ro) and the new reference value (L₀; R),
- continuing the comparison of the curve of the relative diagnostic variable (I_{R}) with the diagnostic threshold (D), and testing the error criterion according to which the relative diagnostic variable (I_{R}) exceeds the diagnostic threshold (D), or
- if the reset criterion is not met, continuing the comparison of the curve of the relative diagnostic variable (I_{R}) with the diagnostic threshold (D) and testing the error criterion according to which the relative diagnostic variable (I_{R}) exceeds a diagnostic threshold (D).

10. Diagnostic method according to claim 6, wherein the first threshold value (S), the propagation time (T) and/or the diagnostic threshold (D) are adjustable.

11. Diagnostic method according to any preceding claim, wherein detecting the input signal (I) optionally comprises the following:
- comparing the input signal (I) with a lower and/or upper limit value,
- testing a plausibility criterion on the basis of the change rate (r) and/or a curve profile of the input signal (I).

12. Control unit (9) of an internal combustion engine (1), said control unit being configured to carry out a diagnostic method according to any of claims 1 to 10, wherein the input signal (I) corresponds to a pressure, temperature and/or mass flow rate variable in an intake pipe arrangement (2).

13. Control unit (9) according to claim 12, wherein the diagnostic method is used for diagnosing an error state to detect a leak in the intake pipe arrangement (2).

14. Control unit (9) according to claim 13, wherein the leak is caused by a removed dipstick (5) and/or a faulty closure.

15. Vehicle (100) comprising an internal combustion engine (1) and a control unit (9) according to any of claims 12 to 14.

## Revendications

1. Procédé de diagnostic permettant de détecter un saut d'une grandeur de mesure continue, comprenant :
- la capture d'un signal d'entrée (I),
- la vérification d'un critère de saut (B_{D}) à l'aide du signal d'entrée (I),
- si le critère de saut (B_{D}) est satisfait, la validation d'un diagnostic avec :
- la capture du signal d'entrée (I) pendant une période (T) à partir d'un instant (to),
- la définition du signal d'entrée (I₀) à l'instant to de la période (T) comme valeur de référence (R) à partir d'une position de référence de départ (Ro),
- la détermination du tracé d'une grandeur de diagnostic relative (I_{R}) par décalage du tracé du signal d'entrée (I) d'une différence de référence (R_{D}) entre la position de référence de départ (Ro) et la valeur de référence (R), le tracé de la grandeur de diagnostic relative (I_{R}) étant élevé de la différence de référence (R_{D}) lorsque la valeur de référence (I₀ ; R) est inférieure à la position de référence de départ (Ro) et étant abaissé de la différence de référence (R_{D}) lorsque la valeur de référence (I₀ ; R) est supérieure à la position de référence de départ (Ro) ;
- la comparaison du tracé de la grandeur de diagnostic relative (I_{R}), avec un seuil de diagnostic (D) et la vérification d'un critère d'erreur (F_{K}), selon lequel la grandeur de diagnostic relative (I_{R}) dépasse le seuil de diagnostic (D).

2. Procédé de diagnostic selon la revendication 1, dans lequel
- lorsque le critère d'erreur (F_{K}) est satisfait pendant la période (T), une information d'état d'erreur, en particulier un bit d'erreur, est produite.

3. Procédé de diagnostic selon la revendication 1, dans lequel
- lorsque le critère d'erreur (F_{K}) n'est pas satisfait pendant la période (T), le procédé de diagnostic est terminé.

4. Procédé de diagnostic selon la revendication 1, 2 ou 3, dans lequel la vérification du critère de saut (B_{D}) comprend la capture du signal d'entrée (I) et la détermination d'un critère de signal.

5. Procédé de diagnostic selon la revendication 4, dans lequel le critère de signal correspond à un taux de modification (r) du signal d'entrée (I).

6. Procédé de diagnostic selon la revendication 5, dans lequel la vérification du critère de saut (B_{D}) présente : la comparaison du taux de modification (r) avec une première valeur seuil (S) et la vérification du critère de saut (B_{D}), selon lequel le taux de modification (r) dépasse la première valeur seuil (S).

7. Procédé de diagnostic selon la revendication 4, dans lequel la vérification du critère de saut (B_{D}) présente une des étapes suivantes :
- capture d'un deuxième signal d'entrée et détermination d'un autre critère de signal ;
- vérification du critère de saut à l'aide de l'autre critère de signal.

8. Procédé de diagnostic selon la revendication 4 ou 7 dans lequel le critère de saut comprend un des critères suivants :
- un tracé de signal caractéristique
- un comportement de signal cyclique
- une combinaison de plusieurs critères de saut

9. Procédé de diagnostic selon la revendication 1, qui, lorsque le critère de saut est de nouveau satisfait pendant la période (T) à un nouvel instant (to), comprend les étapes suivantes :
- la comparaison du signal d'entrée (I₀) au nouvel instant (to) avec la valeur de référence (R) comme position de référence de départ (R₀) et la vérification d'un critère de réinitialisation, selon lequel le signal d'entrée (I₀) est inférieur à la position de référence de départ (R₀),
- lorsque le critère de réinitialisation est satisfait
- la définition du signal d'entrée (I₀) au nouvel instant to de la période (T) comme nouvelle valeur de référence (R) par rapport à la position de référence de départ (Ro),
- la mise à jour du tracé de la grandeur de diagnostic relative (I_{R}), de sorte que celui-ci s'étende de manière décalée de la différence de référence (R_{D}) par rapport à la grandeur de diagnostic (I_{R}) entre la position de référence de départ (Ro) et la nouvelle valeur de référence (I₀ ; R).
- la poursuite de la comparaison du tracé de la grandeur de diagnostic relative (I_{R}), avec le seuil de diagnostic (D) et la vérification d'un critère d'erreur, selon lequel la grandeur de diagnostic relative (I_{R}) dépasse le seuil de diagnostic (D), ou
- lorsque le critère de réinitialisation n'est pas satisfait, la poursuite de la comparaison du tracé de la grandeur de diagnostic relative (I_{R}), avec le seuil de diagnostic (D) et la vérification du critère d'erreur, selon lequel la grandeur de diagnostic relative (I_{R}) dépasse un seuil de diagnostic (D).

10. Procédé de diagnostic selon la revendication 6, dans lequel la première valeur seuil (S), la période (T) et/ou le seuil de diagnostic (D) sont réglables.

11. Procédé de diagnostic selon l'une quelconque des revendications précédentes, dans lequel la capture du signal d'entrée (I) comprend, sélectivement, les étapes suivantes :
- comparaison du signal d'entrée (I) avec une valeur limite inférieure et/ou supérieure,
- vérification d'un critère de plausibilité à l'aide du taux de modification (r) et/ou d'un profil de tracé du signal d'entrée (I).

12. Commande (9) d'un moteur à combustion (1), qui est conçue pour exécuter un procédé de diagnostic selon l'une quelconque des revendications 1 à 10, dans laquelle le signal d'entrée (I) correspond à une grandeur de pression, de température et/ou de débit massique dans une tubulure d'aspiration (2).

13. Commande (9) selon la revendication 12, dans laquelle le procédé de diagnostic est utilisé pour le diagnostic d'un état d'erreur pour la détection d'une fuite dans la tubulure d'aspiration (2).

14. Commande (9) selon la revendication 13, dans laquelle la fuite est provoquée par une jauge de niveau d'huile (5) retirée et/ou une fermeture défectueuse.

15. Véhicule (100) comprenant un moteur à combustion (1) et une commande (9) selon l'une quelconque des revendications 12 à 14.
